# EUROPEAN PATENT SPECIFICATION

(11) **EP 1 914 467 B1**
(45) Date of publication and mention of the grant of the patent: **21.04.2010**
(21) Application number: 06021826.0
(22) Date of filing: 18.10.2006
(51) Int. Cl.: F16M 11/04

(54) **Mechanical arm**
Mechanischer Arm
Bras mécanique

(43) Date of publication of application: 23.04.2008
(73) Proprietor: Jaotech UK Limited, Redhill Surrey RH1 5DZ (GB)
(72) Inventor: Wattimury, Arnold, Neihu Dist. (TW)
(74) Representative: Sayer, Robert David

(56) References cited:
- GB-A- 2 294 632
- US-A- 6 012 693
- US-A1- 2003 075 655
- US-A1- 2004 251 388
- US-A1- 2005 230 585
- US-A1- 2006 102 819

## Description

### 1. Field of the Invention

The present invention relates to a mechanical arm, and more particularly to a mechanical arm having therein a buffering device to provide a buffering effect especially when the mechanical arm is moving from a high position toward a low position.

### 2. Description of the Prior Art

A mechanical arm has been widely used in different fields including car manufacture, plastic molding automation system...etc. However there is one particular place where a lot of people need a mechanical arm to help them do their daily routine works. These people can not walk freely without assistance and/or can not move or pick up things as normal people do. Therefore, they largely depend on the mechanical arm to move or pick up things when they are sitting in a chair or lying on the bed. The most common situation is that a display, whether it's a TV screen or a computer display, is securely attached to a distal free end of the mechanical arm and the user is able to adjust the position of the display as required.

When the mechanical arm is in application, due to the pivotal joint in the mechanical arm, the user is able to freely adjust the mechanical arm with hardly any effort. However, not wanting the user to waste any effort in the movement of adjustment of the mechanical arm seems good at first, but it turns out that the same idea may sometimes become a fatal disadvantage.

The currently available mechanical arm is freely adjustable though, there is no safety mechanism to prevent tragedy from occurrence especially when there is something secured to the distal free end of the mechanical arm. The weight of an object that is securable to the distal free end of the mechanical arm may trigger a sudden downward movement of the mechanical arm when the user is trying to adjust the mechanical arm, which is quite dangerous to the users. Especially most of the users are disabled people.

Although there are mechanical arms with buffering devices to cushion the movement, such as Chin-Chu Li's "SUPPORTING SHELF" (US patent pub. No. 2006/0102819). However, the "SUPPORTING SHELF" is unstable when in use and a torsion or deformation is easily generated due to a side force.

To overcome the shortcomings, the present invention tends to provide an improved mechanical arm to mitigate the aforementioned problems.

The primary objective of the present invention is to provide an improved mechanical arm with a buffering device to provide a buffer effect when the mechanical arm is moving downward.

According to a first aspect, these is provided a mechanical arm according to claim 1.

In order to accomplish the objective, the mechanical arm of the preferred embodiment is provided with a first arm whose first end is firmly fixed to a wall, a second arm whose first end is pivotally connected to a second end of the first arm and a second end securable to an object, and a buffering device connected to a side face of the second arm so that when the second arm is pivoted relative to the first arm, the buffering device is able to provide a buffering effect to the second arm to prevent the second arm to have a sudden movement relative to the first arm.

Other objects, advantages and novel features of the invention will become more apparent from the following detailed description when taken in conjunction with the accompanying drawings.

### In the drawings:

Fig. 1 is a perspective view of the mechanical arm of the present invention;
Fig. 2 is an exploded perspective view of the mechanical arm in Fig. 1;
Fig. 3A is a side plan view showing the position of the buffering device relative to the second arm;
Fig. 3B is a side plan view showing the pivotal connection relationship among the first rod, the second rod and the third rod; and
Figs. 4A and 4B are operational side plan views showing the downward movement of the second arm triggers the buffering device.

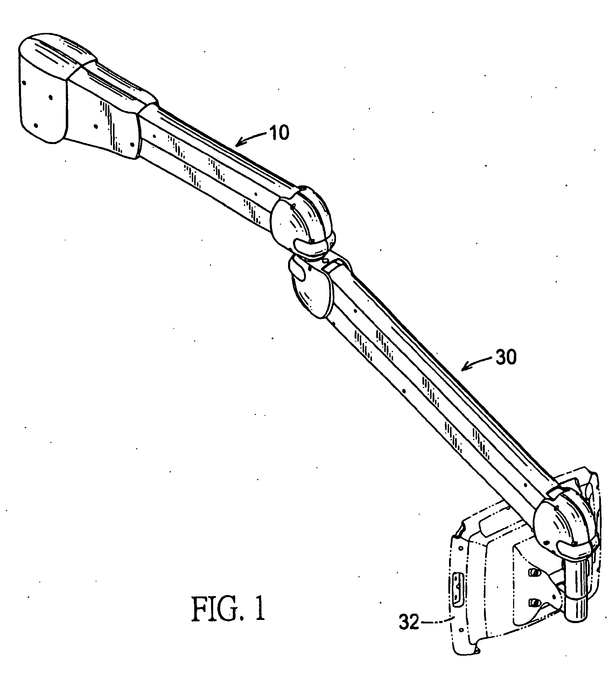

With reference to Fig. 1, it is noted that the mechanical arm in accordance with the present invention includes a first arm (10) and a second arm (30) having a first end pivotally connected to the first arm (10) and a second end securable to an object, e.g. a display (32).

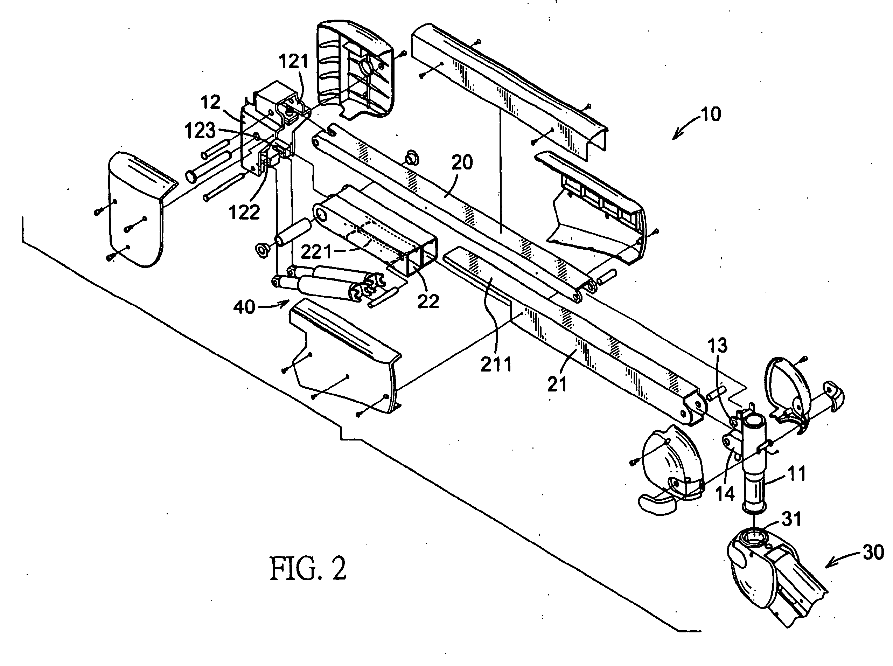

With reference to Fig. 2, it is noted that the first arm (10) is composed of a seat (12), a first rod (20), a second rod (21), a third rod (22) and a connection pin (11). The connection pin (11) is provided with a first ear (13) formed on a top portion of the connection pin (11) and a second ear (14) formed on a mediate portion of the connection pin (11). The seat (12) is provided with a top cutout (121), a bottom cutout (122) and two slits (123) defined in a bottom of the seat (12) to communicate with the bottom cutout (122). The first rod (20) has a first end pivotally received inside the top cutout (121) and a second end pivotally connected to the first car (13). The second rod (21) has a first end and a second end pivotally connected to the second ear (14) of the connection pin (11). The third rod (22) has a first end pivotally received inside the bottom cutout (122) and a second end adjacent to a bottom face of the second rod (21). That is, the second rod (21) has a tail (211) extending from the first end and is rested on top of the third rod (22). The third rod (22) further has two bottom holes (221) defined in a bottom face thereof the bottom holes (221) are adjacent to each other and disposed in two sides of the third rod (22).

A buffering device (40), including two adjacent pneumatic or hydraulic cylinders corresponding respectively to the bottom holes (221) of the third rod (22), has a first end pivotally received in the two slits (123) and a second end extending through the bottom hole (221) of the third rod (22) to be pivotally connected to an inner face of the third rod (22). It is noted from the depiction of the accompanying drawings of Figs. 1 and 2, although the structural limitation of the pivotal connection between components is not expressly specified, any well known method in the art is suitable to be applied to satisfy the pivotal requirement. Furthermore, the second arm (30) has a first end with a pivotal hole (31) corresponding to and securely yet pivotally received therein the connection pin (11).

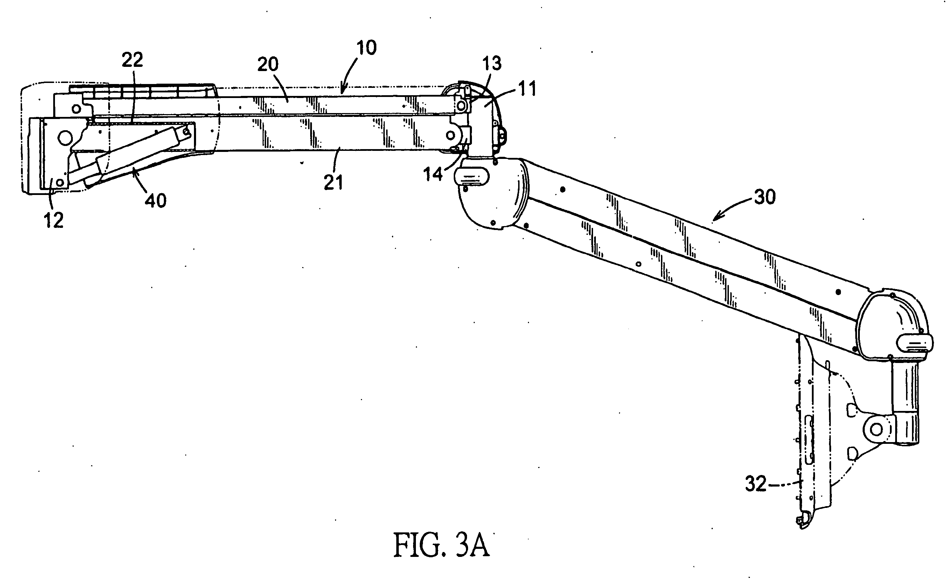

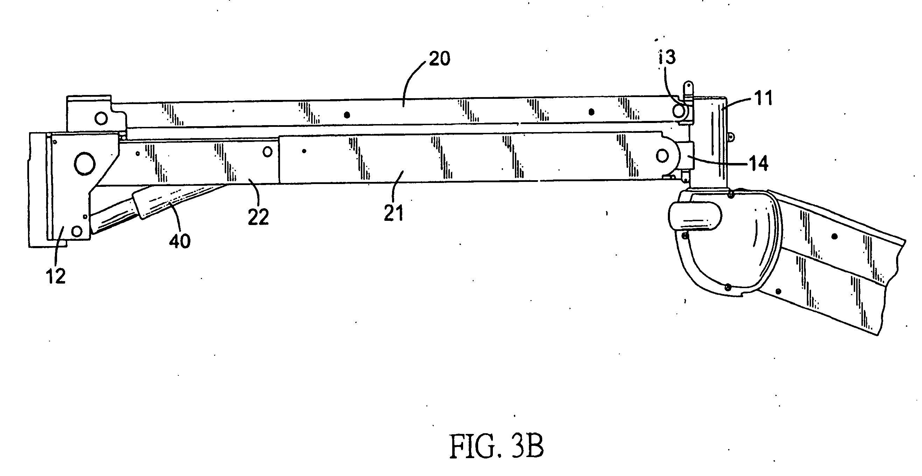

With reference to Figs. 3A and 3B, it is noted that after the assembly of the mechanical arm of the present invention, the first rod (20) is pivotally connected between the seat (12) and the first ear (13), the second end of the second rod (21) is pivotally connected to the second ear (14) and the first end of the third rod (22) is pivotally connected to the seat (12), wherein the first end of the second rod (21) is placed on top of the third rod (22) and the second end of the third rod (22) is adjacent to the bottom face of the second rod (21). In addition, the first end of the buffering device (40) is pivotally connected to the seat (12) and the second end of the buffering device (40) is pivotally connected to the inner face of the third rod (22) after passing through the bottom hole (221) of the third rod (22).

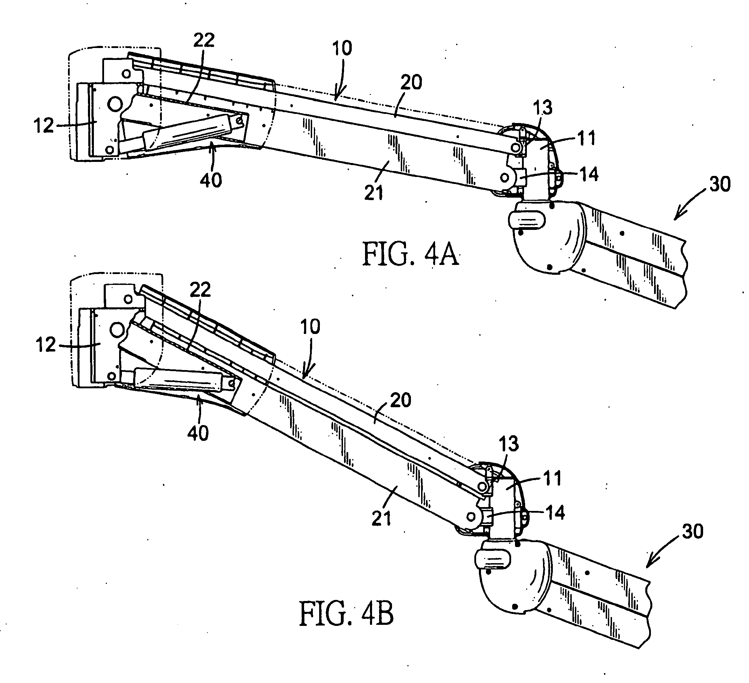

With reference to Figs. 4A and 4B, it is noted that after the connection pin (11) is securely yet pivotally received in the pivotal hole (31) of the second arm (30), a downward movement of the first rod (20) relative to the seat (12) is able to depress the buffering device (40), which provides a buffering effect to the downward movement of the first rod (20) to slow down the downward movement of the first rod (20), such that object below the first rod (20) and the second rod (21) is protected from damage by the second rod (21). Also, the display (32) securely attached to the second end of the second arm (30) is able to safely adjusted to any position as required.

It is concluded from the above description that due to the provision of the buffering device (40), velocity of the downward movement of the mechanical arm is decreased so that the user has much longer time to respond to the downward movement and a safety mechanism is provided to prevent accident from occurrence.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A mechanical arm having:
a first arm (10) securable at one end to a wall through a seat (12) and including at its other end a connection pin (11);
a second arm (30) pivotally connected at one end to the pin (11) with its other end able to hold an object;
**characterised in that**
the connection pin is formed with top portion and mediate portion ears (13, 14);
the first arm comprises three rods, the first (20) of which is pivotally connected at one end to the seat (12) and at its other end to the top portion ear (13), the second of which (21) has a tail (211) and is pivotally connected at its end remote from the tail to the mediate portion ear (14) and the third of which (22) is pivotally connected at one end to the seat (12) with its other end supporting the tail (211) of the second rod;
the arm further comprises a buffering device (40) comprising two adjacent cylinders pivotally connected at one of their ends to the seat (12) and connected at their other ends to the third rod for providing a buffering effect to decrease downward velocity movement of the first arm (10) so as to provide a safety mechanism.

2. An arm according to claim 1, **characterised in that** the seat (12) has a top cut out (121) defined to pivotally receive therein one end of the first rod (20), and a bottom cut out (122) to pivotally receive therein one end of the third rod (22).

3. An arm according to claim 1 or claim 2, **characterised in that** the seat (12) further has slits (123) to receive a first end of the buffering device (40) whose second end is extending outward to pivotally connect to the third rod (22).

## Patentansprüche

1. Mechanischer Arm, der Folgendes aufweist:
einen ersten Arm (10), der an einem Ende durch eine Auflagefläche (12) an einer Wand befestigt werden kann und an seinem anderen Ende einen Verbindungsstift (11) beinhaltet;
einen zweiten Arm (30), der an einem Ende mit dem Verbindungsstift (11) drehbar verbunden ist, wobei sein anderes Ende einen Gegenstand halten kann;
**dadurch gekennzeichnet, dass**
der Verbindungsstift mit einer oberen und einer mittleren Öse (13, 14) ausgebildet ist;
wobei der erste Arm drei Stangen umfasst, wobei die erste (20) davon an einem Ende mit der Auflagefläche (12) und an ihrem anderen Ende mit der oberen Öse (13) drehbar verbunden ist, die zweite davon (21) einen Ausläufer (211) aufweist und an ihrem Ende,
das vom Ausläufer entfernt liegt, mit der mittleren Öse (14) drehbar verbunden ist, und die dritte davon (22) an einem Ende mit der Auflagefläche (12) drehbar verbunden ist, wobei ihr anderes Ende den Ausläufer (211) der zweiten Stange stützt;
der Arm weiterhin eine Puffervorrichtung (40) umfasst, der zwei benachbarte Zylinder umfasst, die an einem ihrer Enden mit der Auflagefläche (12) drehbar verbunden sind und an ihren anderen Enden mit der dritten Stange zur Bereitstellung einer Pufferwirkung verbunden sind, um eine Abwärtsgeschwindigkeitsbewegung des ersten Arms (10) zu verringern, so dass ein Sicherheitsmechanismus bereitgestellt wird.

2. Arm nach Anspruch 1, **dadurch gekennzeichnet, dass** die Auflagefläche (12) einen oberen Ausschnitt (121), der dahingehend definiert ist, darin ein Ende der ersten Stange (20) drehbar aufzunehmen, und einen unteren Ausschnitt (122), um darin ein Ende der dritten Stange (22) drehbar aufzunehmen, aufweist.

3. Arm nach Anspruch 1 oder 2, **dadurch gekennzeichnet, dass** die Auflagefläche (12) weiterhin Schlitze (123) aufweist, um ein erstes Ende der Puffervorrichtung (40) aufzunehmen, deren zweites Ende sich nach außen erstreckt, um sich mit der dritten Stange (22) drehbar zu verbinden.

## Revendications

1. Bras mécanique présentant :
un premier bras (10) pouvant être fixé à une extrémité à une paroi à travers un support (12) et comprenant à son autre extrémité une broche de connexion (11) ;
un second bras (30) connecté à pivotement à une extrémité à la broche (11) avec son autre extrémité capable de tenir un objet ;
**caractérisé en ce que**
la broche de connexion est formée de pattes de portion supérieure et de portion médiate (13, 14) ;
le premier bras comprend trois tiges dont la première (20) est connectée à pivotement à une extrémité au support (12) et à son autre extrémité à la patte de portion supérieure (13), dont la deuxième (21) possède une queue (211) et est connectée à pivotement, à son extrémité à l'écart de la queue, à la patte de portion médiate (14) et dont la troisième (22) est connectée à pivotement à une extrémité au support (12) avec son autre extrémité supportant la queue (211) de la deuxième tige ;
le bras comprend en outre un dispositif tampon (40) comprenant deux cylindres adjacents connectés à pivotement à une de leurs extrémités au support (12) et connectés à leurs autres extrémités à la troisième tige afin de fournir un effet tampon pour diminuer un mouvement à vitesse vers le bas du premier bras (10) de manière à fournir un mécanisme de sûreté.

2. Bras selon la revendication 1, **caractérisé en ce que** le support (12) possède une découpe supérieure (121) définie pour recevoir à pivotement en son sein une extrémité de la première tige (20) et une découpe inférieure (122) pour recevoir à pivotement en son sein une extrémité de la troisième tige (22).

3. Bras selon la revendication 1 ou la revendication 2, **caractérisé en ce que** le support (12) possède par ailleurs des fentes (123) pour recevoir une première extrémité du dispositif tampon (40) dont la seconde extrémité s'étend vers l'extérieur pour se connecter à pivotement à la troisième tige (22).
